# FASCICULE DE BREVET EUROPEEN

(11) **EP 1 751 196 B1**
(45) Date de publication et mention de la délivrance du brevet: **14.04.2010**
(21) Numéro de dépôt: 05735433.4
(22) Date de dépôt: 14.03.2005
(51) Int. Cl.: C08F 220/02, B32B 27/00

(54) **FILM ADHESIF SENSIBLE A LA PRESSION, ET SON PROCEDE DE FABRICATION.**
HAFTKLEBEBAND UND HERSTELLUNGSVERFAHREN DAFÜR
PRESSURE-SENSITIVE ADHESIVE TAPE AND METHOD FOR PRODUCTION THEREOF

(30) Priorité: 13.04.2004 EP 04290974
(43) Date de publication de la demande: 14.02.2007
(73) Titulaire: NOVACEL, F-76250 Deville-les-Rouen (FR)
(72) Inventeur: COUTEY, Catherine, F-76770 Houppeville (FR); LEDDET, Claire, F-76000 Rouen (FR); MASSON, Jean-Loup, F-76230 Bois-Guillaume (FR)
(74) Mandataire: Hubert, Philippe
(86) Numéro de dépôt international: PCT/FR2005/000606
(87) Numéro de publication internationale: WO 2005/111101

(56) Documents cités:
- WO-A-98/23656
- DE-A- 10 141 502
- FR-A- 2 388 868

## Description

L'invention concerne un film adhésif sensible à la pression, et son procédé de fabrication.

L'invention trouve application dans le domaine de la protection des carrosseries automobiles.

Les carrosseries automobiles, fraîchement laquées, doivent être protégées, notamment au moyen d'un film de protection, contre les salissures et les dommages occasionnés au cours de l'assemblage, du transport ou du stockage du véhicule.

Le film de protection peut être appliqué sur les carrosseries à l'aide d'une machine de pose ou à la main, mais quel que soit le mode d'application, les surfaces n'étant pas planes, il y a toujours des bulles d'air ou d'humidité entre la laque et le film. Ces conditions spécifiques de pose, ajoutées à une exposition naturelle prolongée et en particulier à une exposition à des températures élevées, conduisent, après décollement du film, à la présence de marques à l'emplacement de la périphérie des bulles.

Le marché automobile exige aujourd'hui de minimiser la quantité et/ou la taille de ces marques, voire même que celles-ci disparaissent après une période d'exposition naturelle.

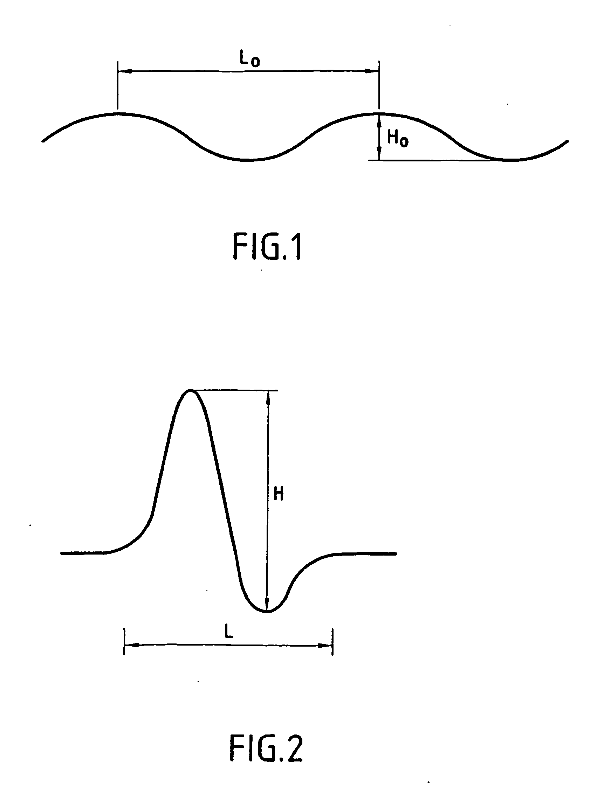

Il n'existe pas de méthode standard pour quantifier ce marquage. Cependant, les laques appliquées aux carrosseries automobiles présentent une rugosité de surface qui, en deux dimensions, peut être modélisée par une superposition de sinusoïdes d'amplitudes et de longueurs d'onde différentes. L'état de rugosité est généralement caractérisé par une amplitude fondamentale H₀ et par une longueur d'onde fondamentale L₀, comme représenté à la figure 1.

Les marques sont dues à une déformation de la laque. Elles présentent un profil, en deux dimensions, qui peut être modélisé par une courbe caractérisée par une amplitude H et une largeur L comme le montre la figure 2. Les valeurs H et L peuvent être mesurées par profilométrie tactile. D'une façon générale, ces marques restent invisibles pour un observateur tant que la valeur L est supérieure ou égale à L₀ - 0,15 mm et que la valeur H est inférieure ou égale à H₀ + 0,15 µm (La valeur de résolution de l'oeil humain à une distance de 30 cm est d'environ 0,1 mm). Ces valeurs sont telles que le contraste entre la marque et la laque est minimisé.

Les films de protection actuellement utilisés comportent une couche support et une couche adhésive formée sur celle-ci, si elle est enduite, via une phase solvant. Par exemple, la demande de brevet EP-A-0 519 278 décrit un film obtenu par enduction d'un caoutchouc en phase solvant sur une couche support en polyoléfine, le module de l'adhésif étant compris entre 2.10⁴ et 70.10⁴ Pa à 60°C. Le brevet US 5 925 456 décrit un film obtenu, soit par enduction d'un mélange à base d'EVA en phase solvant sur support en polyoléfine, soit par coextrusion, et dont la couche adhésive a un angle de perte tan δ compris entre 0,6 et 1,0 mesuré à 60°C et 10⁻² Hz, et entre 0,4 et 0,7 mesuré à 60°C et 10 Hz.

Ces films présentent un taux de marques tolérable pour le marché automobile, mais, s'ils nécessitent l'utilisation de produits en phase solvant, ils ne sont pas satisfaisants sur le plan environnemental.

On connaît par ailleurs d'après la demande de brevet EP-A-0 826 542 un film de protection de fenêtres de véhicules automobiles, dont la couche adhésive, de type polyuréthane, présente un faible niveau adhésif. La demande de brevet WO 01/96 489, décrit un film de protection dont la partie adhésive, enduite sur une couche support, est à base de polyuréthane réticulé. Cette couche adhésive est caractérisée par un angle de perte tan δ augmentant rapidement de 10⁻¹ à 10² rad/sec à température ambiante ou ne variant pas. Toutefois, les propriétés de ce film de protection ne permettent pas d'éviter la présence de marques ou de résidus en surface d'une laque automobile après déprotection. De plus, le niveau adhésif du film est trop faible par rapport à celui demandé par le marché.

Il a maintenant été découvert, et c'est le fondement de l'invention, qu'une dispersion aqueuse acrylique particulière associée à un système réticulant incorporable en phase aqueuse permet de préparer des films de protection pour carrosseries automobiles, qui ne présentent pas les inconvénients mentionnés ci-dessus (marques, faible niveau adhésif, utilisation de solvant), et pas de report d'adhésif prématuré après exposition naturelle (par exemple 6 mois en Floride). Ces films peuvent protéger par exemple des laques de type acrylique-mélamine, alkyde-mélamine, polyuréthane ou autres, ces laques pouvant être de type mono- ou bicomposant (1K ou 2K).

Ainsi, selon un premier aspect, l'invention a pour objet un film adhésif sensible à la pression particulièrement adapté à la protection des carrosseries automobiles.

Ce film adhésif sensible à la pression est obtenu par enduction sur une couche support d'un mélange contenant :
- 100 parties en poids d'une dispersion acrylique aqueuse obtenue par polymérisation en émulsion d'un mélange de monomères comprenant 40 à 70% en poids d'acrylate de 2-éthylhexyle, 20 à 40% en poids d'acrylate d'éthyle, 5 à 15% en poids d'acétate de vinyle, 0 à 8% en poids de styrène et 2 à 5% en poids de monomère(s) porteur(s) d'au moins un groupe carboxylique ;
- 0,05 à 30 parties en poids, de préférence 0,1 à 15,5 parties en poids, d'un système réticulant incorporable en phase aqueuse ; et
- 0 à 5 parties en poids d'un ou plusieurs agent(s) anti- vieillissement.

Bien évidemment, la somme des différents constituants de la dispersion acrylique est égale à 100%.

Le monomère porteur du ou des groupes carboxylique(s) est avantageusement choisi parmi l'acide acrylique, l'acide méthacrylique, l'acide itaconique, l'acide citraconique, l'acide fumarique, l'acide maléique et les dérivés de ces addes, l'acide acrylique et/ou méthacrylique étant préférés.

Avantageusement, la taille moyenne des particules de la dispersion acrylique aqueuse est inférieure à 500 nm, de préférence inférieure à 200 nm.

Cette dispersion acrylique aqueuse peut être obtenue par un procédé classique de polymérisation en émulsion, par exemple selon le procédé décrit dans la demande de brevet EP 1378527 A1 incorporée par référence dans la présente demande.

A titre d'exemple particulièrement préféré d'une telle dispersion, on peut citer le produit actuellement commercialisé sous la dénomination Acronal® DS3559 (BASF). Ce produit présente notamment les caractéristiques physico-chimiques suivantes :
Taux de solide = 52 +/- 1 %
Densité = 1,05 g/cm³ environ
pH entre 5,0 et 6,5
Viscosité à 23°C (DIN 53211) = 17 à 20 s
Tg ≈ - 30°C

Le système réticulant utilisé pour préparer le mélange adhésif destiné à enduire la couche support est avantageusement constitué d'un ou plusieurs agent(s) réticulant(s) choisi(s) parmi les réticulants de type isocyanate aliphatique ou alicyclique, les réticulants de type aziridine, les réticulants de type carbodiimide et les réticulants de type époxy.

Ce système réticulant doit être compatibilisable avec la phase aqueuse de la dispersion acrylique.

Selon différents modes de réalisation préférés de l'invention, le système réticulant précité est constitué :
- soit d'un isocyanate utilisé en une quantité de 0,5 à 30 parties en poids, de préférence de 1 à 15 parties en poids ;
- soit d'une aziridine utilisée en une quantité de 0,05 à 3 parties en poids, de préférence de 0,1 à 1,5 parties en poids ;
- soit d'un carbodiimide utilisé en une quantité de 0,1 à 30 parties en poids, de préférence de 0,1 à 15 parties en poids ;
- soit d'un époxy utilisé en une quantité de 0,1 à 6 parties en poids, de préférence de 0,2 à 3 parties en poids ;
- soit d'un mélange d'une aziridine utilisée en une quantité de 0,05 à 0,5 parties en poids et d'un isocyanate utilisé en une quantité de 1 à 15 parties en poids.

A titre d'exemples de réticulants isocyanates aliphatiques susceptibles d'être utilisés dans le cadre de l'invention, on peut citer les diisocyanates aliphatiques, comme l'hexaméthylène diisocyanate, les trimères de ces diisocyanates, et les triisocyanates aliphatiques, ainsi que les polymères issus de ces monomères homo- ou copolymérisés, ou issus de l'addition d'un polyol ou d'une polyamine avec un ou plusieurs de ces monomères, le polyol ou la polyamine pouvant être un polyéther, un polyester, un polycarbonate, ou un polyacrylate.

A titre d'exemples de réticulants isocyanates alicycliques susceptibles d'être utilisés dans le cadre de l'invention, on peut citer les diisocyanates alicycliques, comme le 3-isocyanatométhyl-3,5,5-triméthylcyclohexyl isocyanate (plus connu sous le nom d'isophorone diisocyanate ou IPDI) ou le diphénylméthane diisocyanate hydrogéné, et les trimères de ces diisocyanates, et les triisocyanates alicycliques, ainsi que les polymères issus de ces monomères homo- ou copolymérisés, ou issus de l'addition d'un polyol ou d'une polyamine avec un ou plusieurs de ces monomères, le polyol ou la polyamine pouvant être un polyéther, un polyester, un polycarbonate, ou un polyacrylate.

A titre d'exemples de réticulants aziridines susceptibles d'être utilisés dans le cadre de l'invention, on peut citer le triméthylol propane tris(3-aziridinyl propionate), le triméthylol propane tris(3(2-méthyl-aziridinyl)-propionate), le triméthylol propane tris[2-aziridinyl butyrate], le triméthylolpropane-tris-(β-(N-aziridinyl)propionate, le tris(1-aziridinyl)phosphine oxyde, le tris(2-méthyl-1-aziridinyl)phosphine oxyde, le pentaérythritol tris-3-(1-aziridinyl propionate), le pentaérythritol-tris-(β-(N-aziridinyl)propionate, et le pentaérythritol tétrakis-3-(1-aziridinyl propionate).

A titre d'exemples de réticulants carbodiimides susceptibles d'être utilisés dans le cadre de l'invention, on peut citer le 1-éthyl-3-(3-diméthylaminopropyl) carbodiimide, le 1-(3-diméthylaminopropyl)-3-éthylocarbodiimide, le 1,3 dicyclohexyl carbodiimide, le N-cyclohexyl-N'-(méthylpolystyrène)carbodiimide, et les sels de ces composés.

A titre d'exemples de réticulants époxy susceptibles d'être utilisés dans le cadre de l'invention, on peut citer les oxazolines et acryloxazolines.

Le mélange adhésif précité peut comprendre de 0 à 5 parties en poids, et de préférence de 0 à 3 parties en poids, d'un ou plusieurs agent(s) anti-vieillissement.

Les agents anti-vieillissement susceptibles d'être utilisés dans le cadre de l'invention sont choisis avantageusement parmi les agents anti-oxydants primaires ou secondaires, les amines à encombrement stérique ou HALS (Hindered Amine Light Stabilizers). Il est possible d'utiliser plusieurs agents du même type, ou bien un mélange d'agents de types différents.

Les agents anti-oxydants primaires préviennent la dégradation du matériau en absorbant les radicaux libres formés sous l'action de la chaleur. Les agents anti-oxydants secondaires empêchent la dégradation du matériau en absorbant les hydroperoxydes formés dans le milieu par réaction de radicaux peroxydes avec le polymère.

A titre d'exemples d'agents anti-oxydants susceptibles d'être utilisés dans le cadre de l'invention, on peut citer les anti-oxydants phénoliques (Irganox® 1010, 1135 de Ciba Specialty Chemicals), aminiques (Irganox® 5057), les phosphites (Irgafos® 168) et les thioéthers.

Les amines à encombrement stérique ou HALS (Hindered Amine Ught Stabilization) empêchent la dégradation du matériau en absorbant les radicaux libres et les hydroperoxydes formés dans le milieu sous l'action d'un rayonnement UV.

A titre d'exemples d'amines à encombrement stérique susceptibles d'être utilisées dans le cadre de l'invention, on peut citer les produits commercialisés sous les dénominations Chimassorb® 2020, Tinuvin® 783, 770 et 765.

Selon un mode de réalisation particulièrement préféré, le mélange adhésif précité contient un mélange d'agent anti-oxydant et d'amine à encombrement stérique (HALS) en tant qu'agents anti-vieillissement.

Le mélange adhésif peut également contenir un ou plusieurs additifs tels que des agents anti-bloquant, des agents absorbeurs UV, des agents plastifiants, des agents mouillants, des agents anti-mousse, des agents d'étalement, des résines tackifiantes, des matières, hors celles citées précédemment, permettant d'ajuster le niveau adhésif.

Les résines tackifiantes susceptibles d'être utilisées dans le cadre de l'invention sont bien connues de l'homme du métier et peuvent être choisies notamment parmi les résines de colophane, les résines terpène-phénol, et les résines obtenues à partir de nappes pétrolières en C₅, (C₅)₂ et/ou C₉ qui peuvent ensuite être partiellement ou totalement hydrogénées. Ces résines ont avantageusement une température de ramollissement, mesurée selon la méthode « Ring and Ball » (norme ASTM E 28), inférieure ou égale à 140°C, généralement comprise dans la gamme de 75 à 140°C, de préférence dans la gamme de 75 à 125°C. A titre d'exemple, on peut citer les produits commercialisés sous la dénomination Escorez® (Exxon), Sylvares® (Arizona), Permalyn® (Eastman).

Ces additifs sont généralement présents en une quantité comprise dans la gamme de 0,1 à 10 % en poids, par rapport au poids de la couche adhésive.

L'épaisseur de la couche adhésive formée à partir du mélange précité est généralement comprise entre 5 et 30 microns, de préférence entre 5 et 25 microns, de préférence encore entre 8 et 20 microns.

La couche support du film adhésif sensible à la pression selon l'invention est à base de polyoléfine(s). Cette couche support peut être du type monocouche ou du type multicouches, de préférence de type tricouches.

A titre d'exemples de polyoléfines susceptibles d'être utilisées dans chaque couche de la couche support, on peut citer les polyéthylènes radicalaires (PE) ; les PE linéaires moyenne, basse ou très basse densité ; les polypropylènes (PP) ; les copolymères d'éthylène et de propylène (EPM) ; et les mélanges de ces composés.

L'expression « mélange de ces composés » inclut au sens de la présente invention un mélange de plusieurs polymères du même type, ou d'un ou plusieurs polymères d'un premier type avec un ou plusieurs polymères d'un ou plusieurs autres types.

Le PE radicalaire peut être indifféremment basse densité (0,910 ≤ d ≤ 0,925) ; moyenne densité (0,925 < d ≤ 0,940) ; ou haute densité (0,940 < d ≤ 0,960).

Les PE linéaires sont des copolymères d'éthylène et d'un monomère oléfinique en C₃-C₈, tel que le propène, le butène, l'hexène, le méthylpentène ou l'octène. Avantageusement, on utilise des PE linéaires basse ou très basse densité, c'est-à-dire avec une densité, mesurée selon la norme ASTM D 1505, comprise dans la gamme de 0,850 à 0,936.

Le PP possède avantageusement une densité, mesurée selon la norme ASTM D 1505, comprise dans la gamme de 0,890 à 0,910.

Les EPM ont de préférence une densité, mesurée selon la norme ASTM D 1505, comprise dans la gamme de 0,84 à 0,90 et avantageusement un taux de propylène compris dans la gamme de 25 à 60 % en poids.

La couche support peut également contenir une ou plusieurs polyoléfine(s) destinée(s) à augmenter l'accrochage de la couche adhésive et de la couche support.

A titre d'exemples de polyoléfines destinées à augmenter l'accrochage de la couche adhésive et de la couche support, on peut citer les copolymères d'éthylène et d'acétate de vinyle (EVA), les copolymères d'éthylène et de dérivé acrylique (EDA), ou les mélanges de ces composés.

Conformément à l'invention, les EVA ont un taux d'acétate de vinyle (VA) inférieur ou égal à 80 % en poids, de préférence inférieur ou égal à 30 % en poids. Ces EVA ont avantageusement un indice de fluidité, mesuré selon la norme ASTM 1238, compris dans la gamme de 0,1 à 40, de préférence dans la gamme de 0,1 à 10 dg/min.

Les EDA ont de préférence un taux de dérivé acrylique, tel que par exemple l'acrylate de butyle et/ou l'acide (méth)acrylique, inférieur ou égal à 40 % en poids. Ces EDA ont avantageusement un indice de fluidité, mesuré selon la norme ASTM 1238, compris dans la gamme de 0,1 à 40, de préférence dans la gamme de 0,1 à 10 dg/min.

La couche support peut également contenir un ou plusieurs additifs tels que des agents glissants, des agents d'aide à l'extrusion (« processing aid »), des agents de matage, des colorants, des agents anti-vieillissement, des absorbeurs UV, des agents anti-bloquants. Lorsque la couche support est du type multicouches, chacune des couches peut contenir lesdits additifs.

Ces additifs sont généralement présents en une quantité comprise dans la gamme de 0,1 à 25 % en poids, par rapport au poids de la couche support.

Selon un mode de réalisation particulièrement préféré, la couche support est de type tricouches.

La couche centrale comprend entre 50 et 90 %, de préférence entre 75 et 85 % de copolymère d'éthylène et de polypropylène, entre 5 et 30 %, de préférence entre 5 et 15% de polyéthylène basse densité linéaire, entre 1 et 10%, de préférence entre 1 et 5% de polyéthylène basse densité radicalaire, entre 0 et 15%, de préférence entre 5 et 10 % de pigment blanc de dioxyde de titane, entre 0 et 5%, de préférence entre 0,05 et 3% d'agent anti-bloquant, entre 0 et 5%, de préférence entre 0,01 et 3% d'agent d'aide à l'extrusion de type élastomère fluoré, entre 0 et 5%, de préférence entre 1 et 3% d'agent anti-vieillissement et/ou d'agent absorbeur UV.

La couche externe comprend entre 50 et 90%, de préférence entre 70 et 80 % de polyéthylène basse densité radicalaire, entre 0 et 40 %, de préférence entre 10 et 30% de polyéthylène basse densité linéaire, entre 0 et 15%, de préférence entre 5 et 10 % de pigment blanc de dioxyde de titane, entre 0 et 5%, de préférence entre 0,05 et 3% d'agent anti-bloquant, entre 0 et 5%, de préférence entre 0,01 et 3% d'agent d'aide à l'extrusion de type élastomère fluoré, entre 0 et 5%, de préférence entre 1 et 3% d'agent anti-vieillissement et/ ou d'agent absorbeur UV.

La couche en contact avec la couche adhésive comprend entre 60 et 90 %, de préférence entre 70 et 80 % de polyéthylène basse densité radicalaire, entre 0 et 40 %, de préférence entre 20 et 30% de polyéthylène basse densité linéaire, entre 0 et 15%, de préférence entre 5 et 10 % de pigment blanc de dioxyde de titane, entre 0 et 5%, de préférence entre 0,05 et 3% d'agent anti-bloquant, entre 0 et 5%, de préférence entre 0,01 et 3% d'agent d'aide à l'extrusion de type élastomère fluoré, entre 0 et 5%, de préférence entre 1 et 3% d'agent anti-vieillissement et/ ou d'agent absorbeur UV.

Les épaisseurs de couche sont comprises entre 10 et 30 % de l'épaisseur totale pour la couche externe, entre 10 et 30 % de l'épaisseur totale pour la couche en contact avec l'adhésif, et entre 40 et 80% de l'épaisseur totale pour la couche centrale.

La couche support est obtenue par (co-)extrusion de la ou des polyoléfine(s) et des additifs éventuellement présents, et traitée Corona ou Plasma.

Son épaisseur est généralement comprise entre 10 et 100 microns, de préférence entre 35 et 70 microns, de préférence encore entre 40 et 60 microns.

Selon un mode de réalisation particulier, le film adhésif conforme à l'invention comprend de l'autre côté de la couche support (c'est-à-dire du côté qui n'est pas en contact avec la couche adhésive) une couche de protection avantageusement anti-adhérente. Une telle couche de protection est bien connue de l'homme du métier.

Le film adhésif sensible à la pression conforme à l'invention est obtenu par enduction de la couche support avec le mélange adhésif précité, selon des techniques bien connues de l'homme du métier.

Selon un second aspect, l'invention a pour objet un procédé de fabrication d'un film adhésif sensible à la pression adapté à la protection des carrosseries automobiles, **caractérisé en ce qu**'il comprend l' enduction sur une couche support d'un mélange contenant :
- 100 parties en poids d'une dispersion acrylique aqueuse obtenue par polymérisation en émulsion à partir d'un mélange de monomères comprenant 40 à 70% en poids d'acrylate de 2-éthylhexyle, 20 à 40% en poids d'acrylate d'éthyle, 5 à 15% en poids d'acétate de vinyle, 0 à 8% en poids de styrène et 2 à 5% en poids de monomère(s) porteur(s) d'au moins un groupe carboxylique, et
- 0,05 à 30 parties en poids, de préférence 0,1 à 15,5 parties en poids, d'un système réticulant incorporable en phase aqueuse ; et
- 0 à 5 parties en poids d'un ou plusieurs agent(s) anti- vieillissement
dans des conditions d'enduction permettant l'obtention d'une couche adhésive enduite présentant une épaisseur comprise entre 5 et 30 microns et un taux d'humidité résiduelle comprise entre 0,001 et 1 % en poids.

Selon une caractéristique particulière, l'enduction précitée comprend une étape de séchage réalisée à une température de four comprise entre 50 et 95 °C et une durée de passage du film comprise entre 1 et 30 secondes, permettant ainsi d'atteindre l'épaisseur et le taux d'humidité précités.

D'une façon générale, le film ainsi obtenu présente un niveau adhésif, mesuré par une force de décollement (pelage 180°, vitesse de pelage = 300 mm/min, mesure à température ambiante), compris entre 40 et 350 cN/cm. Après des tests en température, humidité ou UV, ou combinant ces contraintes (par exemple 14 jours de cycle (6 heures à 23°C et 100% d'humidité relative, puis 6 heures à 40°C et 100% d'humidité relative)), le niveau adhésif est compris entre 40 et 500 cN/cm et les surfaces déprotégées présentent un taux de marques ou résidus d'adhésif acceptable pour le marché automobile.

Selon un troisième aspect, l'invention a pour objet l'utilisation du film adhésif sensible à la pression tel que défini ci-dessus, pour la protection des carrosseries automobiles.

Selon un autre aspect, l'invention a pour cible les carrosseries automobiles protégées par ledit film adhésif sensible à la pression.

L'invention est illustrée par les exemples ci-après, donnés à titre purement indicatif.

### Exemple 1

Une composition adhésive est préparée en mélangeant 100 parties en poids de dispersion acrylique (Acronal® DS3559) et 3 parties en poids de réticulant isocyanate (Vestanat® IPDI (Degussa)), de sorte à obtenir un extrait sec de 50% pour la composition. Le réticulant isocyanate est introduit dans la dispersion sous forme de prémélange à 25% dans l'acétate d'éthyle.

Un film support est fabriqué à l'aide d'un équipement de coextrusion trois couches, par coextrusion « cast » ou soufflage (blown), dans les conditions normales connues de l'homme du métier. On introduit dans l'extrudeuse n°1 un polyéthylène radicalaire de densité 0,924 et d'indice de fluidité 0,7 ; dans l'extrudeuse n°2 un mélange 90/10 en poids de polyéthylène radicalaire de densité 0,924 et d'indice de fluidité 0,7 et de polyéthylène linéaire (co-monomère : butène) de densité 0,925 et d'indice de fluidité 0,7 ; et dans l'extrudeuse n°3 un polyéthylène radicalaire de densité 0,924 et d'indice de fluidité 0,7. Un agent colorant (TiO₂) est incorporé pour donner un aspect blanc et mat au film. Un agent d'aide à l'extrusion est utilisé pour faciliter l'extrusion. Un agent anti-bloquant ainsi qu'un agent absorbeur UV sont également utilisés. Ce film présente une épaisseur de 55 microns. La surface destinée à être en contact avec la couche adhésive est ensuite traitée Corona.

La composition adhésive est enduite sur le film support dans les conditions normales connues de l'homme du métier, de manière à obtenir un dépôt sec de 20 g/m², équivalent à une épaisseur de 20 microns, puis séchée à 85°C pendant 5 secondes.

Ce film, appliqué manuellement sur une plaque automobile prélaquée de type polyuréthane, présente, une heure après avoir été appliqué, un niveau adhésif mesuré par une force de décollement (pelage 180°, vitesse de pelage = 300 mm/min, mesuré à température ambiante) d'environ 200 cN/cm. Après un test de type QUV pendant 300 heures (cycle 4 heures à 40°C et 100% d'humidité, puis 4 heures sous rayonnement UV), le niveau adhésif est d'environ 300 cN/cm et la laque automobile présente peu de marques ou de résidus d'adhésif après déprotection.

### Exemple 2

Une composition adhésive est préparée en mélangeant 100 parties en poids de dispersion acrylique (Acronal® DS3559) et 3 parties en poids de réticulant isocyanate (Desmodur® DA-L (Bayer)), de sorte à obtenir un extrait sec de 50% pour la composition. Le réticulant isocyanate est introduit dans la dispersion sous forme de prémélange à 50% dans l'acétate d'éthyle. Un agent anti-vieillissement (Tinuvin® 770) est incorporé au mélange à hauteur de 0,5 partie en poids.

Un film support est fabriqué à l'aide d'un équipement de co-extrusion trois couches, par co-extrusion « cast » ou soufflage (blown), dans les conditions normales connues de l'homme du métier. On introduit dans l'extrudeuse n°1 un polyéthylène radicalaire de densité 0,924 et d'indice de fluidité 0,7 ; dans l'extrudeuse n°2 un mélange 90/10 en poids de polyéthylène radicalaire de densité 0,924 et d'indice de fluidité 0,7 et de polyéthylène linéaire (co-monomère : butène) de densité 0,925 et d'indice de fluidité 0,7 ; et dans l'extrudeuse n°3 un polyéthylène radicalaire de densité 0,924 et d'indice de fluidité 0,7. Un agent colorant (TiO₂) est incorporé pour donner un aspect blanc et mat au film. Un agent d'aide à l'extrusion est utilisé pour faciliter l'extrusion. Un agent anti-bloquant ainsi qu'un agent absorbeur UV sont également utilisés. Ce film présente une épaisseur de 45 microns. La surface destinée à être en contact avec la couche adhésive est ensuite traitée Corona.

La composition adhésive est enduite sur le film support dans les conditions normales connues de l'homme du métier, de manière à obtenir un dépôt sec de 20 g/m², équivalent à une épaisseur de 20 microns, puis séchée à 85°C pendant 5 secondes.

Ce film, appliqué manuellement sur une plaque automobile prélaquée de type polyuréthane, présente, une heure après avoir été appliqué, un niveau adhésif, mesuré par une force de décollement (pelage 180°, vitesse de pelage = 300 mm/min, mesuré à température ambiante) d'environ 210 cN/cm. Après un test de type QUV pendant 300 heures (cycle 4 heures à 40°C et 100% d'humidité, puis 4 heures sous rayonnement UV), le niveau adhésif est d'environ 310 cN/cm et la laque automobile présente peu de marques ou de résidus d'adhésif après déprotection.

### Exemple 3

Une composition adhésive est préparée en mélangeant 100 parties en poids de dispersion acrylique (Acronal® DS3559), 1 partie en poids de réticulant isocyanate (Desmodur® DA-L (Bayer)) et 0,15 partie en poids de réticulant aziridine (Neocryl CX100), de sorte à obtenir un extrait sec de 50% pour la composition. Le réticulant isocyanate est introduit dans la dispersion sous forme de prémélange à 50% dans l'acétate d'éthyle. Le réticulant aziridine est introduit dans la dispersion sous forme de prémélange à 50% dans l'acétate de méthoxypropanol. Un agent anti-vieillissement (Tinuvin® 770) est incorporé au mélange à hauteur de 0,5 partie en poids.

Un film support est fabriqué à l'aide d'un équipement de co-extrusion trois couches, par co-extrusion « cast » ou soufflage (blown), dans les conditions normales connues de l'homme du métier. On introduit dans l'extrudeuse n°1 un polyéthylène radicalaire de densité 0,924 et d'indice de fluidité 0,7 ; dans l'extrudeuse n°2 un mélange 90/10 en poids de polyéthylène radicalaire de densité 0,924 et d'indice de fluidité 0,7 et de polyéthylène linéaire (co-monomère : butène) de densité 0,925 et d'indice de fluidité 0,7 ; et dans l'extrudeuse n°3 un polyéthylène radicalaire de densité 0,924 et d'indice de fluidité 0,7. Un agent colorant (TiO₂) est incorporé pour donner un aspect blanc et mat au film. Un agent d'aide à l'extrusion est utilisé pour faciliter l'extrusion. Un agent anti-bloquant ainsi qu'un agent absorbeur UV sont également utilisés. Ce film présente une épaisseur de 45 microns. La surface destinée à être en contact avec la couche adhésive est ensuite traitée Corona.

La composition adhésive est enduite sur le film support dans les conditions normales connues de l'homme du métier, de manière à obtenir un dépôt sec de 20 g/m², équivalent à une épaisseur de 20 microns, puis séchée à 85°C pendant 5 secondes.

Ce film, appliqué manuellement sur une plaque automobile prélaquée de type polyuréthane, présente, une heure après avoir été appliqué, un niveau adhésif, mesuré par une force de décollement (pelage 180°, vitesse de pelage = 300 mm/min, mesuré à température ambiante) d'environ 210 cN/cm. Après un test de type QUV pendant 300 heures (cycle 4 heures à 40°C et 100% d'humidité, puis 4 heures sous rayonnement UV), le niveau adhésif est d'environ 310 cN/cm et la laque automobile présente peu de marques ou de résidus d'adhésif après déprotection.

### Exemple 4

Une composition adhésive est préparée en mélangeant 100 parties en poids de dispersion acrylique (Acronal® A240) et 3 parties en poids de réticulant isocyanate (Desmodur® DA-L), de sorte à obtenir un extrait sec de 50% pour la composition. Le réticulant isocyanate est introduit dans la dispersion sous forme de prémélange à 50% dans l'acétate d'éthyle. Un agent anti-vieillissement (Irganox ® 5057) est incorporé au mélange à hauteur de 0,5 partie en poids.

Un film support est fabriqué à l'aide d'un équipement de co-extrusion trois couches, par co-extrusion « cast » ou soufflage (blown), dans les conditions normales connues de l'homme du métier. On introduit dans l'extrudeuse n°1 un polyéthylène radicalaire de densité 0,924 et d'indice de fluidité 0,7 ; dans l'extrudeuse n°2 un mélange 90/10 en poids de polyéthylène radicalaire de densité 0,924 et d'indice de fluidité 0,7 et de polyéthylène linéaire (co-monomère : butène) de densité 0,925 et d'indice de fluidité 0,7 ; et dans l'extrudeuse n°3 un mélange 60/40 en poids de polyéthylène radicalaire de densité 0,924 et d'indice de fluidité 0,7, et de copolymère éthylène - acétate de vinyle (93/7) d'indice de fluidité 2,5, la couche issue de ce dernier mélange étant destinée à être la couche enduite. Un agent colorant (TiO₂) est incorporé pour donner un aspect blanc et mat au film. Un agent d'aide à l'extrusion est utilisé pour faciliter l'extrusion. Un agent anti-bloquant ainsi qu'un agent absorbeur UV sont également utilisés. Ce film présente une épaisseur de 40 microns. La surface destinée à être en contact avec la couche adhésive est ensuite traitée Corona.

La composition adhésive est enduite sur le film support dans les conditions normales connues de l'homme du métier, de manière à obtenir un dépôt sec de 15 g/m², équivalent à une épaisseur de 15 microns, puis séchée à 85°C pendant 5 secondes.

Ce film, appliqué manuellement sur une plaque automobile prélaquée de type polyuréthane, présente, une heure après avoir été appliqué, un niveau adhésif, mesuré par une force de décollement (pelage 180°, vitesse de pelage = 300 mm/min, mesuré à température ambiante) d'environ 210 cN/cm. Après un test en température et atmosphère humide pendant 14 jours (cycle 6 heures à 23°C et 100% d'humidité, puis 6 heures à 40°C et 100% d'humidité), la laque automobile présente peu de marques ou de résidus d'adhésif après déprotection.

### Exemple 5

Une composition adhésive est préparée en mélangeant 100 parties en poids de dispersion acrylique (Acronal® DS3559), 30 parties en poids d'Acronal® LA449S, 0,25 partie en poids de réticulant aziridine (Neocryl CX100), de sorte à obtenir un extrait sec de 50% pour la composition. Le réticulant isocyanate est introduit dans la dispersion sous forme de prémélange à 50% dans l'acétate d'éthyle. Le réticulant aziridine est introduit dans la dispersion sous forme de prémélange à 50% dans l'acétate de méthoxypropanol. Un agent anti-vieillissement (Irganox ® 5057) est incorporé au mélange à hauteur de 0,5 partie en poids.

Un film support est fabriqué à l'aide d'un équipement de co-extrusion trois couches, par co-extrusion « cast » ou soufflage (blown), dans les conditions normales connues de l'homme du métier. On introduit dans l'extrudeuse n°1 un polyéthylène radicalaire de densité 0,924 et d'indice de fluidité 0,7 ; dans l'extrudeuse n°2 un mélange 90/10 en poids de polyéthylène radicalaire de densité 0,924 et d'indice de fluidité 0,7 et de polyéthylène linéaire (co-monomère : butène) de densité 0,925 et d'indice de fluidité 0,7 ; et dans l'extrudeuse n°3 un mélange 60/40 en poids de polyéthylène radicalaire de densité 0,924 et d'indice de fluidité 0,7, et de copolymère éthylène - acétate de vinyle (93/7) d'indice de fluidité 2,5, la couche issue de ce dernier mélange étant destinée à être la couche enduite. Un agent colorant (TiO₂) est incorporé pour donner un aspect blanc et mat au film. Un agent d'aide à l'extrusion est utilisé pour faciliter l'extrusion. Un agent anti-bloquant ainsi qu'un agent absorbeur UV sont également utilisés. Ce film présente une épaisseur de 40 microns. La surface destinée à être en contact avec la couche adhésive est ensuite traitée Corona.

La composition adhésive est enduite sur le film support dans les conditions normales connues de l'homme du métier, de manière à obtenir un dépôt sec de 20 g/m², équivalent à une épaisseur de 20 microns, puis séchée à 85°C pendant 5 secondes.

Ce film, appliqué manuellement sur une plaque automobile prélaquée de type polyuréthane, présente, une heure après avoir été appliqué, un niveau adhésif, mesuré par une force de décollement (pelage 180°, vitesse de pelage = 300 mm/min, mesuré à température ambiante) d'environ 150 cN/cm. Après un test en température et atmosphère humide pendant 14 jours (cycle 6 heures à 23°C et 100% d'humidité, puis 6 heures à 40°C et 100% d'humidité), la laque automobile présente peu de marques ou de résidus d'adhésif après déprotection.

### Exemple 6

Une composition adhésive est préparée en mélangeant 100 parties en poids de dispersion acrylique (Acronal® DS3559) et 0,25 partie en poids de réticulant aziridine (Neocryl CX100®), de sorte à obtenir un extrait sec de 50% pour la composition. Le réticulant aziridine est introduit dans la dispersion sous forme de prémélange à 50% dans l'acétate de méthoxypropanol. Un agent anti-vieillissement, constitué d'un mélange de 0,5 partie en poids de Tinuvin® 765 et 0,5 partie en poids d' Irganox® 5057 est également incorporé au mélange.

Un film support est fabriqué à l'aide d'un équipement de coextrusion trois couches, par coextrusion « cast » ou soufflage (blown), dans les conditions normales connues de l'homme du métier. On introduit dans l'extrudeuse n°1 un polyéthylène radicalaire de densité 0,924 et d'indice de fluidité 0,7 ; dans l'extrudeuse n°2 un mélange 90/10 en poids de polyéthylène radicalaire de densité 0,924 et d'indice de fluidité 0,7 et de polyéthylène linéaire (co-monomère : butène) de densité 0,925 et d'indice de fluidité 0,7 ; et dans l'extrudeuse n°3 un polyéthylène radicalaire de densité 0,924 et d'indice de fluidité 0,7. Un agent colorant (TiO₂) est incorporé pour donner un aspect blanc et mat au film. Un agent d'aide à l'extrusion est utilisé pour faciliter l'extrusion. Un agent anti-bloquant ainsi qu'un agent absorbeur UV sont également utilisés. Ce film présente une épaisseur de 45 microns. La surface destinée à être en contact avec la couche adhésive est ensuite traitée Corona.

La composition adhésive est enduite sur le film support dans les conditions normales connues de l'homme du métier, de manière à obtenir un dépôt sec de 20 g/m², équivalent à une épaisseur de 20 microns, puis séchée à 85°C pendant 5 secondes.

Lorsque ce film est appliqué manuellement sur une plaque automobile dont la couche d'extrême surface est issue d'un mélange de deux composés, le deuxième composé étant de type isocyanate, son niveau adhésif, une heure après avoir été appliqué, tel que mesuré par une force de décollement (pelage 180°, vitesse de pelage = 300 mm/min, mesuré à température ambiante), est d'environ 240 cN/cm. Après un test en température et atmosphère humide pendant 14 jours (cycle 6 heures à 23°C et 100% d'humidité, puis 6 heures à 40°C et 100% d'humidité), la laque automobile présente peu de marques ou de résidus d'adhésif après déprotection. De façon plus précise, les marques observables ont des dimensions caractéristiques L et H (figure 2) mesurables par profilométrie, et respectivement égales à 0,24 mm et 0.14 µm. Ces dimensions rendent les marques difficilement visibles pour un observateur qui regarde la laque à une distance d'environ 30 cm.

## Revendications

1. Film adhésif sensible à la pression adapté à la protection des carrosseries automobiles, **caractérisé en ce qu'**il est obtenu par enduction sur une couche support d'un mélange contenant :
• 100 parties en poids d'une dispersion acrylique aqueuse obtenue par polymérisation en émulsion d'un mélange de monomères comprenant 40 à 70% en poids d'acrylate de 2-éthylhexyle, 20 à 40% en poids d'acrylate d'éthyle, 5 à 15% en poids d'acétate de vinyle, 0 à 8% en poids de styrène et 2 à 5% en poids de monomère(s) porteur(s) d'au moins un groupe carboxylique ;
• 0,05 à 30 parties en poids, de préférence 0,1 à 15,5 parties en poids, d'un système réticulant incorporable en phase aqueuse ; et
• 0 à 5 parties en poids d'un ou plusieurs agent(s) anti- vieillissement.

2. Film adhésif selon la revendication 1, dans lequel le monomère porteur d'au moins un groupe carboxylique est choisi parmi l'acide acrylique, l'acide méthacrylique, l'acide itaconique, l'acide citraconique, l'acide fumarique, l'acide maléique et les dérivés de ces acides.

3. Film adhésif selon l'une des revendications 1 à 2, dans lequel la taille moyenne des particules de la dispersion acrylique aqueuse est inférieure à 500 nm, de préférence inférieure à 200 nm.

4. Film adhésif selon l'une des revendications 1 à 3, dans lequel le système réticulant précité est constitué d'un ou plusieurs agent(s) réticulant(s) choisi(s) parmi les réticulants de type isocyanate aliphatique ou alicyclique, les réticulants de type aziridine, les réticulants de type carbodiimide et les réticulants de type époxy.

5. Film adhésif selon l'une des revendications 1 à 4, dans lequel le système réticulant précité est constitué :
- soit d'un isocyanate utilisé en une quantité de 0,5 à 30 parties en poids, de préférence de 1 à 15 parties en poids ;
- soit d'une aziridine utilisée en une quantité de 0,05 à 3 parties en poids, de préférence de 0,1 à 1,5 parties en poids ;
- soit d'un carbodiimide utilisé en une quantité de 0,1 à 30 parties en poids, de préférence de 0,1 à 15 parties en poids ;
- soit d'un époxy utilisé en une quantité de 0,1 à 6 parties en poids, de préférence de 0,2 à 3 parties en poids ;
- soit d'un mélange d'une aziridine utilisée en une quantité de 0,05 à 0,5 partie en poids et d'un isocyanate utilisé en une quantité de 1 à 15 parties en poids.

6. Film adhésif selon l'une des revendications 1 à 5, dans lequel la couche support est monocouche ou multicouches, de préférence tricouches.

7. Film adhésif selon l'une des revendications 1 à 6, dans lequel la couche support comprend un polyéthylène radicalaire ; un copolymère d'éthylène et d'un monomère oléfinique en C₃-C₈; un polypropylène ; un copolymère d'éthylène et de propylène ou un mélange de ces composés.

8. Film adhésif selon l'une des revendications 1 à 7, dans lequel la couche support comprend en outre une ou plusieurs polyoléfine(s) destinée(s) à augmenter l'accrochage de la couche adhésive et de la couche support choisie(s) notamment parmi les copolymères d'éthylène et d'acétate de vinyle, et les copolymères d'éthylène et de dérivé acrylique.

9. Utilisation d'un film adhésif tel que défini dans l'une des revendications 1 à 8 pour la protection des carrosseries automobiles.

10. Procédé de fabrication d'un film adhésif sensible à la pression adapté à la protection des carrosseries automobiles, **caractérisée en ce qu'**il comprend l' enduction sur une couche support d'un mélange contenant :
• 100 parties en poids d'une dispersion acrylique aqueuse obtenue par polymérisation en émulsion à partir d'un mélange de monomères comprenant 40 à 70% en poids d'acrylate de 2-éthylhexyle, 20 à 40% en poids d'acrylate d'éthyle, 5 à 15% en poids d'acétate de vinyle, 0 à 8% en poids de styrène et 2 à 5% en poids de monomère(s) porteur(s) d'au moins un groupe carboxylique, et
• 0,05 à 30 parties en poids, de préférence 0,1 à 15,5 parties en poids, d'un système réticulant incorporable en phase aqueuse ; et
• 0 à 5 parties en poids d'un ou plusieurs agent(s) anti- vieillissement
dans des conditions permettant l'obtention d'une couche adhésive enduite présentant une épaisseur comprise entre 5 et 30 microns et un taux d'humidité résiduelle comprise entre 0,001 et 1 % en poids.

11. Procédé selon la revendication 10 **caractérisé en ce que** l'étape de séchage au cours du procédé d'enduction est réalisée à une température comprise entre 50 et 95 °C pendant une durée comprise entre 1 et 30 secondes.

## Claims

1. Pressure-sensitive adhesive film suitable for protecting motor vehicle bodies, **characterized in that** it is obtained by coating a support layer with a mixture containing:
• 100 parts by weight of an aqueous acrylic dispersion obtained by emulsion polymerization of a monomer mixture comprising 40 to 70% by weight of 2-ethylhexyl acrylate, 20 to 40% by weight of ethyl acrylate, 5 to 15% by weight of vinyl acetate, 0 to 8% by weight of styrene and 2 to 5% by weight of one or more monomers carrying at least one carboxylic group;
• 0.05 to 30 parts by weight, preferably 0.1 to 15.5 parts by weight, of a crosslinking system that can be incorporated in aqueous phase; and
• 0 to 5 parts by weight of one or more anti-ageing agents.

2. Adhesive film according to Claim 1, in which the monomer carrying at least one carboxylic group is chosen from acrylic acid, methacrylic acid, itaconic acid, citraconic acid, fumaric acid, maleic acid and derivatives of these acids.

3. Adhesive film according to either of Claims 1 and 2, in which the mean particle size of the aqueous acrylic dispersion is less than 500 nm, preferably less than 200 nm.

4. Adhesive film according to one of Claims 1 to 3, in which the aforementioned crosslinking system consists of one or more crosslinking agents chosen from crosslinkers of the aliphatic or alicyclic isocyanate type, crosslinkers of the aziridine type, crosslinkers of the carbodiimide type and crosslinkers of the epoxy type.

5. Adhesive film according to one of Claims 1 to 4, in which the aforementioned crosslinking system consists of:
- either an isocyanate used in an amount of 0.5 to 30 parts by weight, preferably 1 to 15 parts by weight;
- or an aziridine used in an amount of 0.05 to 3 parts by weight, preferably 0.1 to 1.5 parts by weight;
- or a carbodiimide used in an amount of 0.1 to 30 parts by weight, preferably 0.1 to 15 parts by weight;
- or an epoxy used in an amount of 0.1 to 6 parts by weight, preferably 0.2 to 3 parts by weight;
- or a mixture of an aziridine used in an amount of 0.05 to 0.5 parts by weight and of an isocyanate used in an amount of 1 to 15 parts by weight.

6. Adhesive film according to one of Claims 1 to 5, in which the support layer is a monolayer or a multilayer, preferably a trilayer.

7. Adhesive film according to one of Claims 1 to 6, in which the support layer comprises a radical polyethylene, a copolymer of ethylene and a C₃-C₈ olefinic monomer, a polypropylene, an ethylenepropylene copolymer, or a blend of these compounds.

8. Adhesive film according to one of Claims 1 to 7, in which the support layer further includes one or more polyolefins intended to increase the bonding of the adhesive layer and the support layer, the said polyolefin(s) being chosen in particular from ethylene/vinyl acetate copolymers and ethylene/acrylic derivative copolymers.

9. Use of an adhesive film as defined in one of Claims 1 to 8 for the protection of motor vehicle bodges.

10. Process for manufacturing a pressure-sensitive adhesive film suitable for protecting motor vehicle bodies, **characterized in that** it comprises the coating of a support layer with a mixture containing:
• 100 parts by weight of an aqueous acrylic dispersion obtained by emulsion polymerization of a monomer mixture comprising 40 to 70% by weight of 2-ethylhexyl acrylate, 20 to 40% by weight of ethyl acrylate, 5 to 15% by weight of vinyl acetate, 0 to 8% by weight of styrene and 2 to 5% by weight of one or more monomers carrying at least one carboxylic group;
• 0.05 to 30 parts by weight, preferably 0.1 to 15.5 parts by weight, of a crosslinking system that can be incorporated in aqueous phase; and
• 0 to 5 parts by weight of one or more anti-ageing agents
under conditions allowing a coated adhesive layer to be obtained having a thickness of between 5 and 30 microns and a residual moisture content of between 0.001 and 1% by weight.

11. Process according to Claim 10, **characterized in that** the drying step during the coating process is carried out at a temperature of between 50 and 95°C for a time of between 1 and 30 seconds

## Patentansprüche

1. Druckempfindlicher Haftfilm, der für den Schutz von Fahrzeugkarosserien geeignet ist, **dadurch gekennzeichnet, daß** er durch Auftragen einer Mischung auf eine Tragschicht erhalten wird, welche Mischung folgendes enthält:
- 100 Gewichtsteile einer wäßrigen Acryldispersion, die durch Emulsionspolymerisation eines Monomergemischs erhalten wird, das 40 bis 70 Gew.-% 2-Ethylhexylacrylat, 20 bis 40 Gew.-% Ethylacrylat, 5 bis 15 Gew.-% Vinylacetat, 0 bis 8 Gew.-% Styrol sowie 2 bis 5 Gew.-% eines (von) wenigstens eine Carboxylgruppe tragenden Monomers (Monomeren) umfaßt,
- 0,05 bis 30 Gewichtsteile, vorzugsweise 0,1 bis 15,5 Gewichtsteile eines in wäßrige Phase einbindbaren vernetzenden Systems, und
- 0 bis 5 Gewichtsteile eines oder mehrerer Alterungsschutzmittel(s).

2. Haftfilm nach Anspruch 1, wobei das wenigstens eine Carboxylgruppe tragende Monomer aus Acrylsäure, Methacrylsäure, Itaconsäure, Citraconsäure, Fumarsäure, Maleinsäure und den Derivaten dieser Säuren ausgewählt ist.

3. Haftfilm nach einem der Ansprüche 1 bis 2, wobei die durchschnittliche Größe der Teilchen der wäßrigen Acryldispersion unter 500 nm, vorzugsweise unter 200 nm liegt.

4. Haftfilm nach einem der Ansprüche 1 bis 3, wobei das vorgenannte vernetzende System von einem oder mehreren Vernetzungsmittel(n) gebildet ist, das (die) aus den Vernetzungsmitteln vom Typ aliphatisches oder alizyklisches Isocyanat, den Vernetzungsmitteln vom Typ Aziridin, den Vernetzungsmitteln vom Typ Carbodiimid und den Vernetzungsmitteln vom Typ Epoxid ausgewählt ist (sind).

5. Haftfilm nach einem der Ansprüche 1 bis 4, wobei das vorgenannte vernetzende System gebildet ist von:
- entweder einem Isocyanat, das in einer Menge von 0,5 bis 30 Gewichtsteilen, vorzugsweise 1 bis 15 Gewichtsteilen verwendet wird,
- oder einem Aziridin, das in einer Menge von 0,05 bis 3 Gewichtsteilen, vorzugsweise 0,1 bis 1,5 Gewichtsteilen verwendet wird,
- oder einem Carbodiimid, das in einer Menge von 0,1 bis 30 Gewichtsteilen, vorzugsweise 0,1 bis 15 Gewichtsteilen verwendet wird,
- oder einem Epoxid, das in einer Menge von 0,1 und 6 Gewichtsteilen, vorzugsweise 0,2 bis 3 Gewichtsteilen verwendet wird,
- oder von einer Mischung aus einem Aziridin, das in einer Menge von 0,05 bis 0,5 Gewichtsteilen verwendet wird, und aus einem Isocyanat, das in einer Menge von 1 bis 15 Gewichtsteilen verwendet wird.

6. Haftfilm nach einem der Ansprüche 1 bis 5, wobei die Tragschicht ein- oder mehrlagig, vorzugsweise dreilagig ist.

7. Haftfilm nach einem der Ansprüche 1 bis 6, wobei die Tragschicht ein radikalisches Polyethylen, ein Copolymer aus Ethylen und einem olefinischen C₃-C₈-Monomer, ein Polypropylen, ein Ethylen-Propylen-Copolymer oder eine Mischung aus diesen Verbindungen umfaßt.

8. Haftfilm nach einem der Ansprüche 1 bis 7, wobei die Tragschicht ferner ein oder mehrere Polyolefin(e) umfaßt, das (die) dazu bestimmt ist (sind) die Haftung der Haftschicht und der Tragschicht zu erhöhen und die insbesondere unter den EthylenVinylacetat-Copolymeren sowie den Ethylen-Acrylderivat-Copolymeren ausgewählt sind.

9. Verwendung eines Haftfilms, wie er in einem der Ansprüche 1 bis 8 definiert ist, für den Schutz von Fahrzeugkarosserien.

10. Verfahren zur Herstellung eines druckempfindlichen Haftfilms, der für den Schutz von Fahrzeugkarosserien geeignet ist, **dadurch gekennzeichnet, daß** es das Auftragen einer Mischung enthaltend:
- 100 Gewichtsteile einer wäßrigen Acryldispersion, die durch Emulsionspolymerisation aus einem Monomergemisch erhalten wird, das 40 bis 70 Gew.-% 2-Ethylhexylacrylat, 20 bis 40 Gew.-% Ethylacrylat, 5 bis 15 Gew.-% Vinylacetat, 0 bis 8 Gew.-% Styrol sowie 2 bis 5 Gew.-% eines (von) wenigstens eine Carboxylgruppe tragenden Monomers (Monomeren) umfaßt, und
- 0,05 bis 30 Gewichtsteile, vorzugsweise 0,1 bis 15,5 Gewichtsteile eines in wäßrige Phase einbindbaren vernetzenden Systems, sowie
- 0 bis 5 Gewichtsteile eines oder mehrerer Alterungsschutzmittel(s), auf eine Tragschicht unter Bedingungen umfaßt, die den Erhalt einer aufgetragenen Haftschicht mit einer Dicke im Bereich zwischen 5 und 30 Mikron und einem Restfeuchtegehalt von 0,001 bis 1 % Gew.-% ermöglichen.

11. Verfahren nach Anspruch 10, **dadurch gekennzeichnet, daß** der Trocknungsschritt im Laufe des Auftragverfahrens bei einer Temperatur zwischen 50 und 95° für eine Zeitdauer von 1 bis 30 Sekunden durchgeführt wird.
